# EUROPÄISCHE PATENTANMELDUNG

(11) **EP 2 682 832 A1**
(43) Veröffentlichungstag der Anmeldung: **08.01.2014**
(21) Anmeldenummer: 12174940.2
(22) Anmeldetag: 04.07.2012
(51) Int. Cl.: G05B 19/4099, B25B 1/20, B23Q 3/06

(54) **Spannmittel zum Einspannen von Turbinenschaufeln und Verfahren zu seiner Herstellung**

(71) Anmelder: Siemens Aktiengesellschaft, 80333 München (DE)
(72) Erfinder: Arjakine, Nikolai, 10555 Berlin (DE); Gasser, Andres, 52066 Aachen (DE); Kelbassa, Jana, 52072 Aachen (DE); Linnenbrink, Stefanie, 52372 Kreuzau (DE); Melzer-Jokisch, Torsten, 15366 Neuenhagen bei Berlin (DE); Mentzel, Frank, 52066 Aachen (DE); Ott, Michael, 45470 Mülheim an der Ruhr (DE)

(57) **Zusammenfassung**

Es wird ein Spannmittel (17) zur Verwendung beim Einspannen von Turbinenschaufeln zur Verfügung gestellt. Das Spannmittel (17) weist eine Aufnahme (19) für den Schaufelfuß der einzuspannenden Turbinenschaufel auf, wobei die Aufnahme (19) die negative Form (13) des aufzunehmenden Schaufelfußes besitzt.

## Beschreibung

Die vorliegende Erfindung betrifft ein Spannmittel zum Einspannen von Turbinenschaufeln, bspw. um Prozessentwicklungen an realen Turbinenschaufeln zu testen, sowie ein Verfahren zum Herstellen des Spannmittels.

In der Forschung und Entwicklung von Turbinenschaufeln werden Prozessentwicklungen an realen Turbinenschaufeln getestet. Hierzu werden die Schaufeln fixiert und verspannt, um wiederholgenaue Testbedingungen zu realisieren. Hierbei besteht die Herausforderung, gleichwertige Testbedingungen für Turbinenschaufeln möglichst einheitlich zu gestalten, auch wenn diese unterschiedliche Fußprofile und/oder unterschiedliche Verschleißzustände aufweisen. Unterschiedliche Testschaufeln müssen daher jeweils sehr genau im Spannmittel justiert werden, um gleich Testbedingungen herbeizuführen. Ein typisches Spannmittel für die Turbinenschaufeln ist beispielsweise in EP 2 442 008 A1 beschrieben. Das in diesem Stand der Technik beschriebene Spannmittel weist einen Exzenter auf, mit dem eine Turbinenschaufel in dem Spannmittel fixiert und zentriert werden kann.

Eine Halterung für eine Turbinenschaufel, die für eine Reparatur der Turbinenschaufel Verwendung findet und die einen beweglichen Klemmbacken aufweist, ist in US 2007/0158389 A1 beschrieben. Mit Hilfe des beweglichen Klemmbackens und eines feststehenden Klemmbackens kann die zu reparierende Turbinenschaufel in der Halterung eingespannt werden.

Aufgabe der vorliegenden Erfindung ist es, ein vorteilhaftes Spannmittel zum Einspannen von Turbinenschaufeln sowie ein Verfahren dessen Herstellung zur Verfügung zu stellen.

Die genannte Aufgabe wird durch ein Verfahren zum Herstellen von Spannmitteln zum Einspannen von Turbinenschaufeln nach Anspruch 1 bzw. durch ein Spannmittel nach Anspruch 11 gelöst. Die abhängigen Ansprüche enthalten vorteilhafte Ausgestaltungen der Erfindung.

Im erfindungsgemäßen Verfahren zum Herstellen von Spannmitteln zum Einspannen von Turbinenschaufeln wird die dreidimensionale Geometrie eines Schaufelfußes erfasst, die erfasste Geometrie als 3D-Modell des Schaufelfußes digitalisiert und ein an den Schaufelfuß angepasstes Spannmittel mittels eines 3D-Fertigungsverfahrens anhand des 3D-Modells hergestellt.

Mit dem erfindungsgemäßen Verfahren lässt sich rasch ein für den jeweiligen Schaufelfuß formgerecht optimiertes Spannmittel für die Prozessentwicklung kostengünstig herstellen. Das Einspannen eines Schaufelfußes mit Hilfe eines derart hergestellten Spannmittels ist sehr gut reproduzierbar und erfordert keinen Aufwand zum Justieren der Schaufelposition, da diese von dem an den Schaufelfuß angepassten Spannmittel zwangsläufig justiert wird.

Das Digitalisieren der Geometrie des Schaufelfußes kann insbesondere erfolgen, indem die negative Geometrie des Schaufelfußes dreidimensional vermessen wird. Die zu vermessene negative Geometrie des Schaufelfußes kann dabei geschaffen werden, indem ein Abguss vom Schaufelfuß erstellt wird, der einen die negative Form des Schaufelfußes repräsentierenden Bereich aufweist. Zum dreidimensionalen Vermessen der negativen Form des Schaufelfußes wird dann der die negative Form des Schaufelfußes repräsentierende Bereich des Abgusses vermessen. Die negative Form des Schaufelfußes repräsentiert dann die positive Form des herzustellenden Spannmittels im Bereich der zur Anlage des Schaufelfußes vorgesehenen Anlagenfläche, so dass durch die Vermessung der negativen Form des Schaufelfußes unmittelbar die positive Form des Spannmittels in dem den Schaufelfuß haltenden Bereich, d.h. die positive Form der im Spannmittel für den Schaufelfuß vorgesehenen Aufnahme, ermittelt wird. Ein Umrechnen der positiven Schaufelgeometrie in eine negative Schaufelgeometrie ist dadurch nicht nötig.

Zum Erstellen des Abgusses findet vorteilhafter Weise eine Gießform Verwendung, die einen Bereich zum Aufnehmen des Schaufelfußes aufweist und deren Formflächen außerhalb dieses Bereiches die negative Form des Spannmittels repräsentieren. Diese Art des Erstellens des Abgusses bietet die Möglichkeit, anschließend die gesamte Geometrie des Abgusses, der dann ein gegenständliches Modell des herzustellenden Spannmittels repräsentiert, dreidimensional zu vermessen und die vermessene dreidimensionale Geometrie als 3D-Modell des gesamten Spannmittels zu digitalisieren. Es kann dann in einem einzigen Fertigungsschritt des 3D-Fertigungsverfahrens das gesamte Spannmittel, also etwa ein Klemmblock, gefertigt werden. Anderenfalls ist das Fertigen der äußeren Geometrie des Spannmittels in einem vom Fertigen der Aufnahme für den Schaufelfuß getrennten Fertigungsprozess herzustellen.

Statt die Gießform außerhalb des zum Aufnehmen des Schaufelfußes vorgesehenen Bereichs mit Formflächen zu versehen, welche die negativen Form des Spannmittels repräsentieren, besteht auch die Möglichkeit, den Abguss nach seiner Erstellung formgebend zu bearbeiten, beispielsweise durch spanabhebende Verfahren, um ein gegenständliches Modell des Spannelements zu schaffen, dessen dreidimensionale Form zum Erzeugen des 3D-Modells vermessen werden kann. Aber auch wenn der Abguss aufgrund der verwendeten Gießform bereits ein gegenständliches Modell des Spannmittels darstellt, kann ein Bearbeiten des Abgusses erfolgen, beispielsweise um im Sinne einer Feinbearbeitung die gewünschte Oberflächenqualität des gegenständlichen Modells zu erreichen.

Im erfindungsgemäßen Verfahren kann das Vermessen der negativen Form des Schaufelfußes und/oder das Vermessen des Abgusses mit Hilfe eines Laser-Triangulationsverfahrens, und damit berührungslos, erfolgen.

Das erfindungsgemäße Verfahren bietet außerdem die Möglichkeit, vor dem Herstellen des Spannmittels individuelle Anpassungen des digitalen 3D-Modells an den mit Hilfe des Spannmittels zu verspannenden Schaufelfuß vorzunehmen. Beispielsweise kann die Anordnung von Kühlluftbohrungen im Schaufelfuß berücksichtigt werden, indem mit den Kühlluftöffnungen kommunizierende Öffnungen in das 3D-Modell eingebracht werden.

Die Spannmittel können anhand des 3D-Modells aus unterschiedlichen Materialien hergestellt werden. Die Materialwahl kann daher beispielsweise im Hinblick auf die Temperatureigenschaften des Materials, die zu erwartenden Spannkräfte, etc. erfolgen. So sind beispielsweise metallische Materialien ebenso denkbar, wie elastische oder unelastische Kunststoffe.

Zum Herstellen des an den Schaufelfuß angepassten Spannmittels kann insbesondere ein selektiver Schmelzprozess (SLM, Selective Laser Melting) herangezogen werden. Aber auch andere Fertigungsverfahren, die auf computergestützter numerischer Steuerung (CNC, Computerized Numerical Control) beruhen, wie etwa 3D-Drucker oder CNC-Universalfräsmaschinen können zum Herstellen der Spannmittel Verwendung finden.

Ein erfindungsgemäßes Spannmittel zur Verwendung beim Einspannen von Turbinenschaufeln weist eine Aufnahme für den Schaufelfuß der einzuspannenden Turbinenschaufel auf. Die Aufnahme besitzt die negative Form des aufzunehmenden Schaufelfußes. Mit einem derartigen Spannmittel ist das Einspannen eines Schaufelfußes sehr gut reproduzierbar und erfordert keinen Aufwand zum Justieren der Schaufelposition, da diese aufgrund der negativen Form des Schaufelfußes, welche die Aufnahme aufweist, beim Einspannen automatisch justiert wird. Das erfindungsgemäße Spannmittel lässt sich zudem mit dem beschriebenen erfindungsgemäßen Verfahren rasch und kostengünstig herstellen und dabei an die jeweils einzuspannenden Schaufeln anpassen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Die Figuren 1 bis 9 zeigen Schritte des erfindungsgemäßen Verfahrens zum Herstellen von Spannmitteln zum Einspannen von Turbinenschaufelfüßen.

Figur 10 zeigt ein erfindungsgemäßes Spannmittel.

Figur 11 zeigt beispielhaft eine Gasturbine in einen Längsteilschnitt.

Figur 12 zeigt ein Beispiel für eine Turbinenschaufel in einer perspektivischen Darstellung.

Figur 13 zeigt ein Beispiel für eine Brennkammer einer Gasturbine.

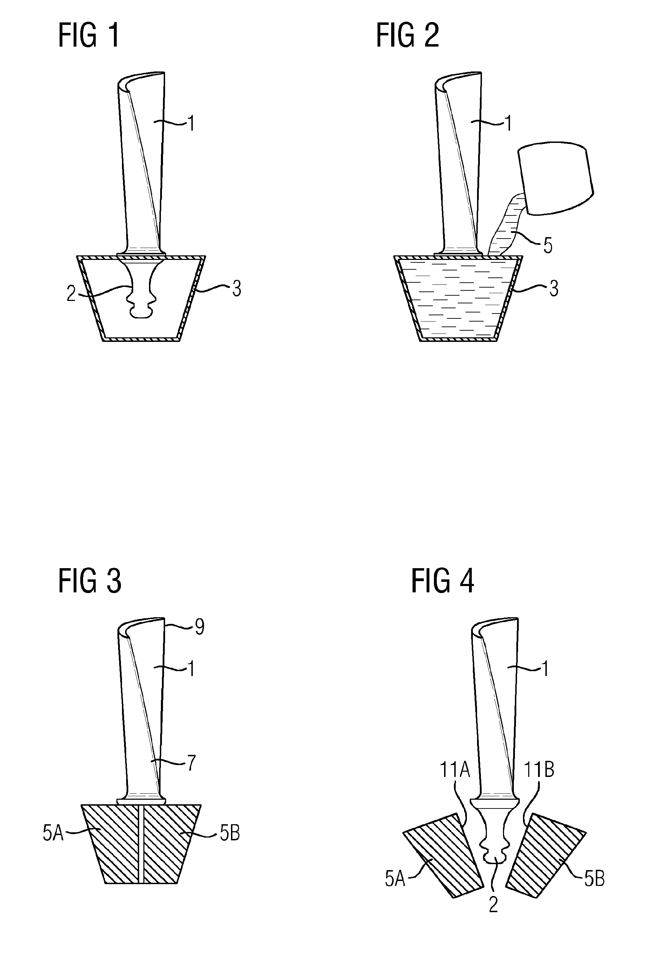

Nachfolgend wird das erfindungsgemäße Verfahren zum Herstellen von Spannmitteln zum Einspannen von Turbinenschaufeln anhand der Figuren 1 bis 9 näher erläutert. Die Figuren zeigen dabei stark schematisiert einzelne, zum Teil optionale Schritte des Verfahrens.

In einem ersten, in Figur 1 gezeigten Schritt wird eine Turbinenschaufel 1, deren Schaufelfuß 2 einer mit Hilfe des herzustellenden Spannmittels einzuspannenden Turbinenschaufel entspricht, in eine Gießform 3 so eingesetzt, dass der Schaufelfuß 2 in die Gießform 3 hineinragt, wohingegen die übrigen Teile der Turbinenschaufel 1 nicht in die Gießform 3 hineinragen.

Nachdem die Turbinenschaufel 1 mit dem Schaufelfuß 2 in die Gießform 3 eingeführt worden ist und die Turbinenschaufel fixiert wurde, wird eine aushärtbare Gießmasse 5 in die Gießform 3 eingefüllt und aushärten gelassen. Dies ist schematisch in Figur 2 dargestellt. Im vorliegenden Ausführungsbeispiel kommt eine aushärtbare Silikonmasse als Gießmasse zur Anwendung. Andere Gießmassen als Silikon können jedoch ebenfalls Verwendung finden, wobei nicht nur Kunststoffe, sondern aber auch andere Stoffe in Betracht kommen. Eine andere gängige, nicht auf Kunststoff basierende Gießmasse, die ebenfalls zum Herstellen des Abgusses geeignet ist, ist bspw. Gips.

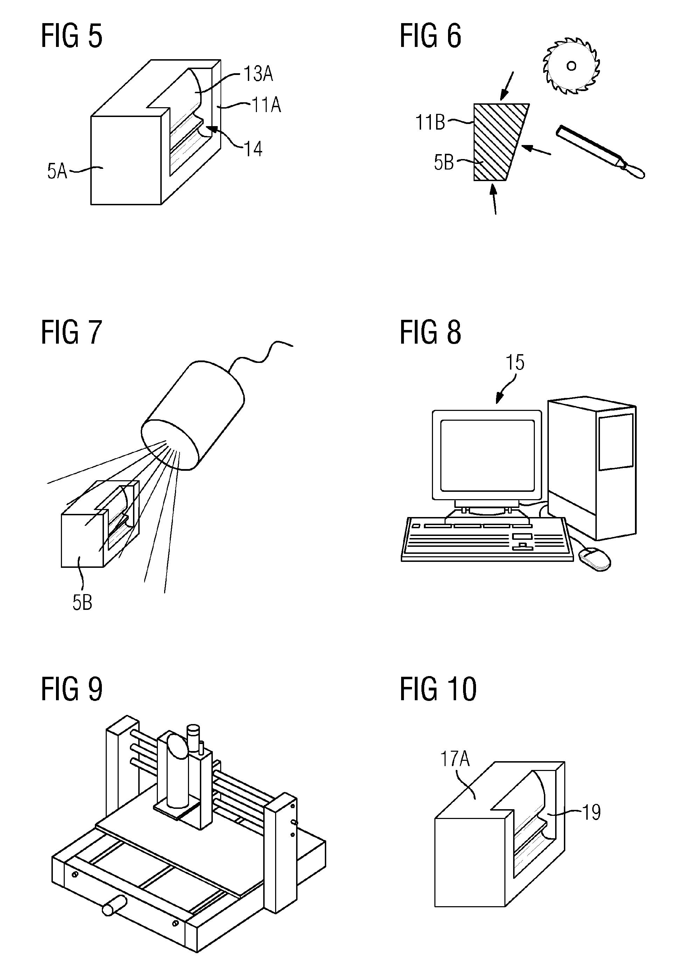

Nach dem Aushärten der Gießmasse 5 wird die Gießform 3 vom ausgehärteten Gießmassenblock entfernt und dieser dann in Bereich der Anströmkante 7 und der Abströmkante 9 der Turbinenschaufel 1 aufgeschnitten, wie in Fig. 3 schematisch dargestellt ist. Die dadurch entstehenden Hälften 5A,5B der ausgehärteten Gießmasse, nachfolgend Gießmassenblöcke 5A, 5B genannt, können dann vom Schaufelfuß 2 abgenommen werden (vgl. Fig. 4). Die vom Schaufelfuß abgenommenen Hälften der ausgehärteten Gießmasse weisen im Bereich ihrer Trennflächen 11A, 11B einen die negative Form 13 des Schaufelfußes repräsentierenden Bereich 14 auf, wie insbesondere in Fig. 5 zu erkennen ist.

Die mit Hilfe des erfindungsgemäßen Verfahrens herzustellenden Spannmittel sollen in einer Einspannvorrichtung zum Einspannen von Turbinenschaufeln zur Anwendung kommen. Eine solche Vorrichtung weist eine Aufnahme für die Spannmittel auf, an deren Geometrie die Außenkonturen der Gießmassenblöcke 5A, 5B angepasst werden. Hierzu kann, wie in Fig. 6 dargestellt ist, ein Nachbearbeiten der Gießmassenblöcke 5A, 5B erfolgen, um die gewünschte Außenkontur herzustellen. Es besteht aber auch die Möglichkeit, eine Gießform 3 zu verwenden, deren Innenfläche die Geometrie der Aufnahme für die Spannmittel in der Einspannvorrichtung widerspiegelt. Die Außenflächen der Gießmassenblöcke 5A, 5B sind dann bereits an die Form der Aufnahme in der Einspannvorrichtung angepasst, so dass ein Nachbearbeiten wenn überhaupt nur noch im Rahmen einer Feinbearbeitung zum Herstellen der gewünschten Oberflächenqualität erfolgt.

Nachdem die Gießmassenblöcke 5A, 5B vom Schaufelfuß 2 abgenommen und ggf. nachbearbeitet worden sind, wird die dreidimensionale Geometrie beider Gießmassenblöcke 5A, 5B vollständig erfasst, wie in Fig. 7 angedeutet ist. Im vorliegenden Ausführungsbeispiel erfolgt das Erfassen der dreidimensionalen Geometrie mit Hilfe eines Laser-Triangulationsverfahrens. Aber auch andere Methoden zum Gewinnen von dreidimensionalen Geometriedaten können zur Anwendung kommen, beispielsweise Aufnahmen mit stereoskopischen Kameras oder die Gewinnung dreidimensionaler Daten unter Zuhilfenahme von auf die Gießmassenblöcke projizierten Lichtmustern.

Die erfasste dreidimensionale Geometrie jedes der Gießmassenblöcke 5A, 5B wird digitalisiert und als digitalisiertes 3D-Modell in einem Rechner gespeichert (Fig.8). Da im vorliegenden Ausführungsbeispiel die Gießmassenblöcke 5A,5B gegenständliche Modelle der Spannmittel darstellen, sind im Rechner 15 daher vollständige dreidimensionale Modelle der Spannmittel hinterlegt. Diese dreidimensionalen Modelle der Spannmittel werden dann dafür verwendet, unter Zuhilfenahme eines 3D-Fertigungsverfahrens die Spannmittel herzustellen.

In Fig. 9 ist angedeutet, wie das Herstellen der Spannmittel mit Hilfe eines selektiven Laserschmelzverfahrens erfolgt. In einem solchen wird der zu verarbeitende Werkstoff in Pulverform in dünnen Schichten auf eine Grundplatte aufgetragen und mit Hilfe eines Laserstrahls lokal aufgeschmolzen, wobei die Aufschmelzbereiche der Geometrie des herzustellenden Spannmittels folgen. Nach dem Wiedererstarren erfolgt dann der Auftrag der nächsten Pulverschicht, die dann wiederum gemäß der hinterlegten 3D-Daten selektiv aufgeschmolzen wird, um das Pulver in denjenigen Bereichen, in denen das Spannmittel aufgebaut werden soll, mit der darunterliegenden verfestigten Schicht zu verbinden. Auf diese Weise werden die Spannmittel anhand des im Rechner 15 hinterlegten 3D-Modells computergesteuert aufgebaut.

Als Material, aus dem die Spannmittel hergestellt werden, kommt im vorliegenden Ausführungsbeispiel ein Metall zur Anwendung. Aber auch andere Materialien, insbesondere Kunststoffe, sind zur Herstellung der Spannmittel geeignet.

Ein fertig hergestelltes Spannmittel 17A, welches eine Aufnahme 19 für den Schaufelfuß einer zu haltenden Turbinenschaufel aufweist, ist in Figur 10 gezeigt. Die Aufnahme 19 ist durch den die negative Form des Schaufelfußes 2 repräsentierenden Bereich des Spannmittels 17A gebildet. Dieses Spannmittel 17A ist optimal an den Schaufelfuß 2 der Turbinenschaufel 1 angepasst, so dass sich eine Turbinenschaufel mit entsprechenden Schaufelfuß rasch und wiederholgenau präzise ausgerichtet einspannen lässt.

Da im Rechner 15 ein vollständiges dreidimensionales Modell des Spannmittels vorliegt, besteht die Möglichkeit, dieses Modell am Rechner zu bearbeiten, beispielsweise um abgewandelte Spannmittel, etwa mit Kühlluftkanälen, die mit Kühllufteinlassöffnungen im Schaufelfuß kommunizieren, herzustellen, oder um den Ort von Kühlluftkanäle im Spannmittel zu variieren, wenn beispielsweise im Rahmen der Prozessentwicklung die Lage der Kühllufteinlassöffnungen in den Schaufelfüßen optimiert werden sollen. Das beschriebene Verfahren bietet zudem die Möglichkeit, durch geeignete Wahl des Materials, aus dem die Spannmittel aufgebaut werden, auf die Anforderungen des einzuspannenden Schaufelfußes zu reagieren. So kann beispielsweise je nach Spannkraft, mit der Schaufelfüße eingespannt werden, ein anderes Material zum Herstellen der Spannmittel zum Einsatz kommen. Andere Materialanforderungen, die bei der Wahl des zum Aufbauen der Spannmittel verwendeten Materials Berücksichtigung finden können, können beispielsweise durch die zu erzielenden Temperatureigenschaften des Spannmittels bestimmt sein.

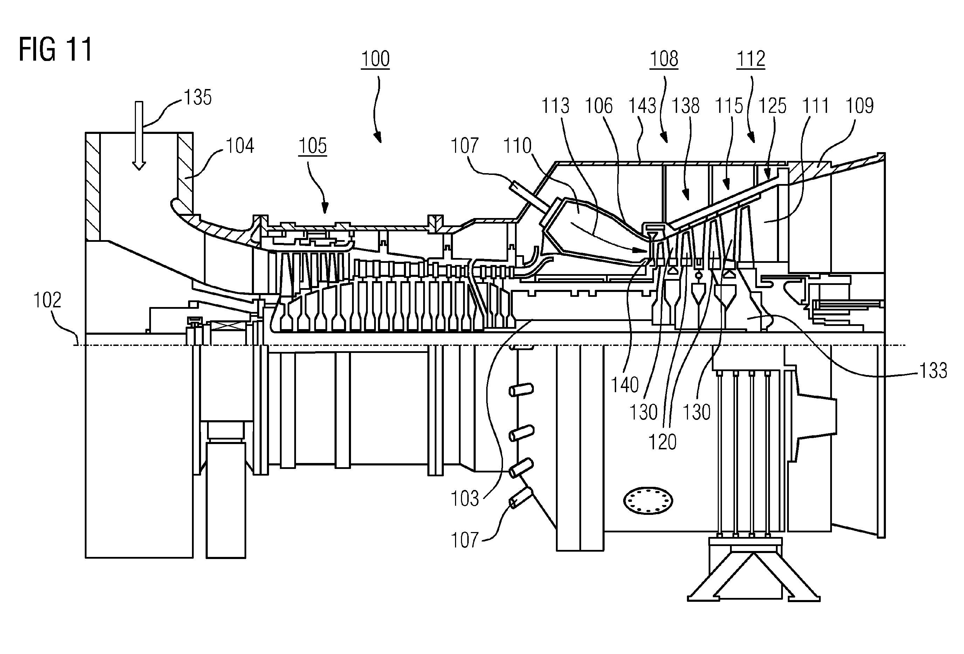

Die Figur 11 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.
Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).
Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1. Auf der MCrA1X kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

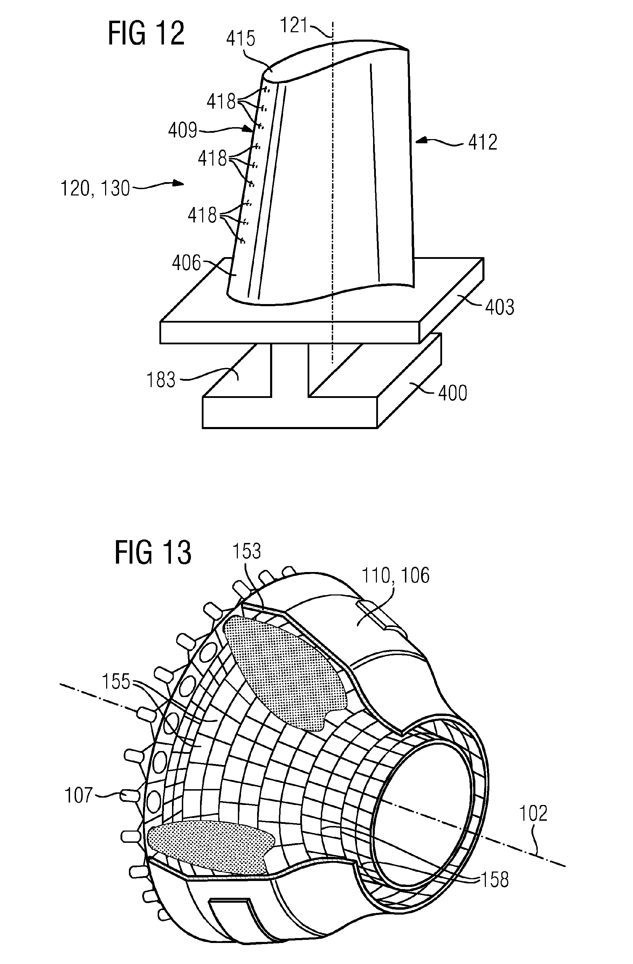

Die Figur 12 zeigt in perspektivischer Ansicht eine Laufschaufel 120 oder Leitschaufel 130 einer Strömungsmaschine, die sich entlang einer Längsachse 121 erstreckt.
Die Strömungsmaschine kann eine Gasturbine eines Flugzeugs oder eines Kraftwerks zur Elektrizitätserzeugung, eine Dampfturbine oder ein Kompressor sein.
Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).
Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.
Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.

Auf der MCrA1X-Schicht (als Zwischenschicht oder als äußerste Schicht) bildet sich eine schützende Aluminiumoxidschicht (TGO = thermal grown oxide layer).
Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrA1X kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrA1X-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 13 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrA1X kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Die anhand der Ausführungsbeispiele beschriebene Erfindung ermöglicht ein rasches und kostengünstiges Herstellen formgerecht optimierter Spannmittel zum Einspannen von Turbinenschaufeln insbesondere im Rahmen der Prozessentwicklung. So lässt sich die Prozessentwicklung durch Vermeidung von Fehlern verbessern.

Zwar ist die vorliegende Erfindung zu Erläuterungszwecken anhand konkreter Ausführungsbeispiele für das Verfahren und das Spannmittel erläutert worden, jedoch sind Abweichungen von diesen Ausführungsbeispielen möglich. Beispielsweise besteht die Möglichkeit, anstatt des Trennens der Gießmasse nach dem Aushärten in zwei Gießmassenblöcke bereits in der Form Trennelemente vorzusehen, so dass die Gießform in zwei Hälften unterteilt ist, von denen jede zum Ausformen eines Gießmassenblockes dient. Auch das Erzeugen der Spannmittel kann anders erfolgen, als dies im Ausführungsbeispiel beschrieben worden ist. Statt des selektiven Laserschmelzens können andere Verfahren zur Anwendung kommen, die ein computergesteuertes dreidimensionales Herstellen der Spannmittel ermöglichen. So sind etwa computergesteuerte Fräsmaschinen ebenso geeignet, die Spannmittel herzustellen, wie auf selektivem Laserschmelzen beruhende Vorrichtungen. Allgemein eignen sich alle Vorrichtungen, mit denen sich durch computergesteuerten Materialauftrag oder computergesteuerten Materialabtrag eine dreidimensionale Form aufbauen bzw. aus einem Materialblock herausarbeiten lässt. Die vorliegende Erfindung soll daher nicht auf die zu Erläuterungszwecken beschriebenen Ausführungsbeispiele beschränkt sein, sondern lediglich durch die angehängten Ansprüche.

## Patentansprüche

1. Verfahren zum Herstellen von Spannmitteln (17) zum Einspannen von Turbinenschaufeln (1),
**dadurch gekennzeichnet, dass**
die dreidimensionale Geometrie eines Schaufelfußes (2) erfasst wird, die erfasste Geometrie als 3D-Modell des Schaufelfußes (2) digitalisiert wird und anhand des 3D-Modells an den Schaufelfuß (2) angepasste Spannmittel (17) mittels eines 3D-Fertigungsverfahrens hergestellt werden.

2. Verfahren nach Anspruch 1,
**dadurch gekennzeichnet, dass**
die Geometrie des Schaufelfußes (2) digitalisiert wird, indem die negative Form (13) des Schaufelfußes (2) dreidimensional vermessen wird.

3. Verfahren nach Anspruch 2,
**dadurch gekennzeichnet, dass**
eine zu vermessende negative Form (13) des Schaufelfußes (2) geschaffen wird, indem vom Schaufelfuß (2) ein Abguss mit einem die negative Form (13) des Schaufelfußes (2) repräsentierenden Bereich (14) erstellt wird und zum dreidimensionalen Vermessen der negative Form (13) des Schaufelfußes (2) der die negative Form (13) des Schaufelfußes (2) repräsentierenden Bereich (14) des Abgusses vermessen wird.

4. Verfahren nach Anspruch 3,
**dadurch gekennzeichnet, dass**
zum Erstellen des Abgusses eine Gießform (3) Verwendung findet, die einen Bereich zum Aufnehmen des Schaufelfußes aufweist und deren Formflächen außerhalb des Bereiches zum Aufnahmen des Schaufelfußes die negative Form des herzustellenden Spannmittels (17) repräsentieren.

5. Verfahren nach Anspruch 4,
**dadurch gekennzeichnet, dass**
die gesamte Geometrie des Abgusses dreidimensional vermessen und die vermessene dreidimensionale Geometrie als 3D-Modell des gesamten Spannmittels (17) digitalisiert wird.

6. Verfahren nach Anspruch 3 oder Anspruch 4,
**dadurch gekennzeichnet, dass**
der Abguss außerhalb des die negative Form des Schaufelfußes repräsentierenden Bereiches (14) bearbeitet wird, um ein Modell des Spannmittels zu erzeugen.

7. Verfahren nach Anspruch 6,
**dadurch gekennzeichnet, dass**
die gesamte Geometrie des bearbeiteten Abgusses dreidimensional vermessen wird, um das Modell des Spannmittels (17) zu digitalisieren.

8. Verfahren nach Anspruch 2, 5 oder 7,
**dadurch gekennzeichnet, dass**
das Vermessen der negativen Form (13) des Schaufelfußes (2) und/oder das Vermessen des Abgusses mit Hilfe eines Laser-Triangulationsverfahrens erfolgt.

9. Verfahren nach einem der Ansprüche 1 bis 8,
**dadurch gekennzeichnet, dass**
vor dem Herstellen des Spannmittels (17) individuelle Anpassungen des 3D-Modells an den mit Hilfe des Spannmittels (17) zu verspannenden Schaufelfuß (2) vorgenommen werden.

10. Verfahren nach einem der Ansprüche 1 bis 9,
**dadurch gekennzeichnet, dass**
das Herstellen des an den Schaufelfuß (2) angepassten Spannmittels (17) mittels eines selektiven Laserschmelzens erfolgt.

11. Spannmittel (17) zur Verwendung beim Einspannen von Turbinenschaufeln (1),
welches eine Aufnahme (19) für den Schaufelfuß (2) der einzuspannenden Turbinenschaufel (1) aufweist, wobei die Aufnahme (19) die negative Form (13) des aufzunehmenden Schaufelfußes (2) besitzt.
